# EUROPÄISCHE PATENTANMELDUNG

(11) **EP 1 028 091 A2**
(43) Veröffentlichungstag der Anmeldung: **16.08.2000**
(21) Anmeldenummer: 00102530.3
(22) Anmeldetag: 07.02.2000
(51) Int. Cl.: C02F 1/00, C02F 11/00

(54) **Verfahren zur Aufbereitung von Gärresten**

(30) Priorität: 11.02.1999 DE 19905593
(71) Anmelder: Schwarting-Uhde GmbH, Umwelt- und Bioverfahrenstechnik, 24941 Flensburg (DE)
(72) Erfinder: Tenbrink, Jürgen, 48565 Steinfurt (DE)
(74) Vertreter: Patentanwälte Lippert, Stachow, Schmidt & Partner

(57) **Zusammenfassung**

Die Erfindung betrifft ein Verfahren zur Aufbereitung von Gärresten aus der Bioabfall-, Gülle- oder Klärschlammvergärung. Erfindungsgemäß ist vorgesehen, daß den Gärresten, bevor sie der Atmosphäre ausgesetzt werden, Mittel zur Unterbindung der Ammoniakemission zugegeben werden.

## Beschreibung

Die Erfindung betrifft ein Verfahren zur Aufbereitung von Gärresten, aus Bioabfall-, Gülle- oder Klärschlammvergärungsanlagen, die als Bodenverbesserer oder Düngemittel Anwendung finden sollen.

Beim biologischen Abbau stickstoffhaltiger organischer Substanz durch Mikroorganismen entstehen die Abbauprodukte Kohlendioxid, Wasser und Ammonium bzw. Ammoniak. Ammonium liegt gelöst in der wässerigen Phase als NH₄-Kation vor. Bei Vorhandensein von Sauerstoff wird das Ammonium von Nitrifikanten zu Nitrat umgesetzt. Ammoniumnitrat (NH₄NO₃) wird beispielsweise für Düngemittelzwecke verwendet, da dieses ein idealer Stickstofflieferant ist. Das in der wässerigen Phase vorliegende Ammonium steht im Gleichgewicht zu dem gasförmigen Ammoniak (NH₃), welches stechend riecht und stark schleimhautreizend ist.

Bei der anaeroben Behandlung organischer Substanz, beispielsweise bei der Vergärung von Bioabfällen, Gülle oder Klärschlamm reichert sich bei Abwesenheit von Sauerstoff Ammonium in der wässerigen Phase in hoher Konzentration in der Gärsuspension an. Wegen der Abwesenheit von Sauerstoff findet keine Nitrifikation statt.

Wird die Gärsuspension aus der Vergärungseinheit ausgetragen, wird aufgrund eines großen Konzentrationsgefälles von Ammonium in der wässerigen Phase zur Ammoniakkonzentration in der Umgebungsluft verstärkt Ammoniak freigesetzt, was wegen des stechenden Geruchs von Ammoniak zu einer erhöhten Geruchsbelästigung führen kann.

Um solche Geruchsbelästigungen zu vermeiden, ist es bekannt, daß freigesetzte gasförmige Ammoniak abzuführen, beispielsweise durch Belüftung der Gärreste in einem geschlossenen System, bis die Freisetzung von Ammoniak auf ein Minimum reduziert ist. Die ammoniakhaltige Abluft wird dabei separat aufbereitet.

Eine derartige Behandlung von Gärresten wird allgemein als verfahrenstechnisch aufwendig empfunden. Schließlich ist eine derartige Behandlung der Gärreste insoweit nachteilhaft, als daß auf diese Art und Weise die Düngewirkung des Gärrestes herabgesetzt wird, da in der wässerigen Phase weniger Ammonium zur Nitrifikation zu Nitrat als Düngemittelstoff zur Verfügung steht.

Aus der DE 43 33 468 ist ein Verfahren zur Behandlung von biogenen Restmassen bekannt, bei dem beispielsweise Klärschlamm zunächst einer anaeroben Faulung und Gewinnung von Biogas unterzogen wird. Anschließend wird der Faulschlamm einer temperaturaktivierten Flüssigkeitsphasenhydrolyse unterzogen, das Hydrolysegas, eine deponierfähige Restmasse und eine ausgefällte Schwermetallfraktion werden abgezogen, das verbleibende Hydrolysat wird dem Gärprozeß wieder zugeführt. Das aus dem Hydrolysegas freiwerdende Ammoniak wird von der deponierfähigen Restmasse absorbiert, um deren Düngewirkung zu steigern. Hierzu wird vorgeschlagen, mit der angesäuerten Restmasse in dieser Ammoniumsalze zu bilden, die zur Bodenverbesserung als Nitratspender dienen können.

In der Restmasse etwa enthaltene Ammoniumsalze, wie Ammoniumnitrat oder Ammoniumchlorid können aufgrund ihrer leichten Löslichkeit nur kurzfristig als Nitratspender dienen, diese Salze sind leicht und schnell auswaschbar, so daß keine Langzeit-Düngewirkung erzielt wird.

Aus der DE 196 00 483 A1 ist bekannt, Geruchsstoffe, die bei biologischen Stoffwechselprozessen, insbesondere beim Lagern und Kompostieren von Stoffen in Form von Bioabfällen entstehen, durch Zugabe von Adsorbentien wie Aktivkohle, Zeolithen, Perlit, Kieselgur oder dergleichen zu binden. Die DE 196 00 483 A1 befaßt sich ausschließlich mit der Bindung von Geruchsstoffen.

Schließlich ist aus der JP-Abstracts Nr. 117:134456w bekannt, bei der anaeroben Fermentation bzw. bei der anaeroben Vergärung von organischen Substanzen Adsorbentien zur Bindung bzw. zur Entfernung etwa freiwerdenden Ammoniaks zu verwenden. Ebenso wie bei dem in der DE 196 00 483 A1 beschriebenen Verfahren wird in dieser Druckschrift vorgeschlagen, unlösbare Sorbentien dem biogenen Rohmaterial zuzumischen.

Der Erfindung liegt die Aufgabe zugrunde, ein Verfahren zur Aufbereitung von Gärresten zur Verfügung zu stellen, bei welchem mit verhältnismäßig einfachen Mitteln eine Geruchsbelästigung durch gasförmiges Ammoniak vermieden wird und bei welchem die Verwertbarkeit der aufbereiteten Gärreste in Hinblick auf deren Langzeit-Düngewirkung verbessert wird.

Die Aufgabe wird gelöst mit den Merkmalen des Anspruchs 1.

Das erfindungsgemäße Verfahren hat den Vorzug, daß Ammonium in Form von NH₄-Kationen als Düngemittelstoff im Gärrest verbleibt. Dieses Ammonium wird unter Umständen erst nitrifiziert, wenn der Gärrest als Bodenverbesserer ausgebracht wurde. Dies hat den Vorzug, daß der aus dem Gärrest resultierende Bodenverbesserer über längere Zeit als Nitratspender dient, da anfänglich im Boden enthaltenes Nitrat verhältnismäßig schnell auswaschbar ist.

Nach dem erfindungsgemäßen Verfahren wird ein Zuschlagstoff gewählt, der Alumosilikate (Aluminatsilikate) enthält. Diese haben die entsprechende Elektronegativität, um Ammonium-Kationen zu binden bzw. anzulagern. Bei Alumosilikaten bzw. Aluminatsilikaten ist anstelle des Siliziums in der tetraedaförmigen Grundstruktur Aluminium eingebaut, so daß sich wegen der Vierwertigkeit der Silizumatome und der Dreiwertigkeit der Aluminiumatome insgesamt eine negative Ladung ergibt.

Zu den Alumosilikaten gehören beispielsweise Feldspäte, Tone und Zeolite. Diese Mineralien sind in der Natur in großen Mengen vorhanden und daher kostengünstig verfügbar.

Vorzugsweise wird als Zuschlagstoff eine mineralische Substanz mit Feldspäten und/oder deren Verwitterungsprodukten gewählt. Verwitterungsprodukte der Feldspäte sind beispielsweise Tone.

Besonders vorteilhaft ist es, wenn als Zuschlagstoff ein Mineralmehl zugegeben wird, d. h., wenn der Zuschlagstoff mehlige Konsistenz hat, so daß dieser auch adsorbtive Eigenschaften hat.

Zweckmäßigerweise wird der Zuschlagstoff den aus der Vergärungsanlage ausgetragenen Gärresten über wenigstens eine Dosier- und Mischeinrichtung zugesetzt.

Die Zugabe des Zuschlagsstoffs kann sowohl vor oder nach einer möglichen Gärrestentwässerung vorgenommen werden.

Vorzugsweise erfolgt die Zugabe des Zuschlagstoffs vor einer Gärrestentwässerung, um zu verhindern, daß mit der Entwässerung größere Mengen an in der wässerigen Phase vorliegendem Ammonium ausgetragen werden.

Wenn das Abwasser in einem geschlossenen System geführt wird, kann selbstverständlich die Gärrestentwässerung auch vor der Zugabe des Zuschlagsstoffs erfolgen.

Die Verweilzeit der Gärreste in einer Mischeinrichtung und die Menge des beigemengten Zuschlagsstoffs werden vorzugsweise in Abhängigkeit der Ammoniumkonzentration in dem aufzubereitenden Gärrest gewählt bzw. bestimmt.

Das erfindungsgemäße Verfahren hat die Vorzüge, daß von Gärresten ausgehende Geruchsbelästigungen zuverlässig vermieden werden, da die Freisetzung von gasförmigem Ammoniak bereits bei dessen Entstehung durch Einsatz eines Zuschlagsstoffs verhindert wird. Gleichzeitig wird die Düngewirkung der Gärreste verbessert.

Die Erfindung wird nachstehend anhand zwei schematischer Abbildungen erläutert, von denen
- Fig. 1: schematisch den Ablauf des erfindungsgemäßen Verfahrens mit einer Mischeinrichtung und
- Fig. 2: den Ablauf des erfindungsgemäßen Verfahrens mit zwei Mischeinrichtungen veranschaulicht.

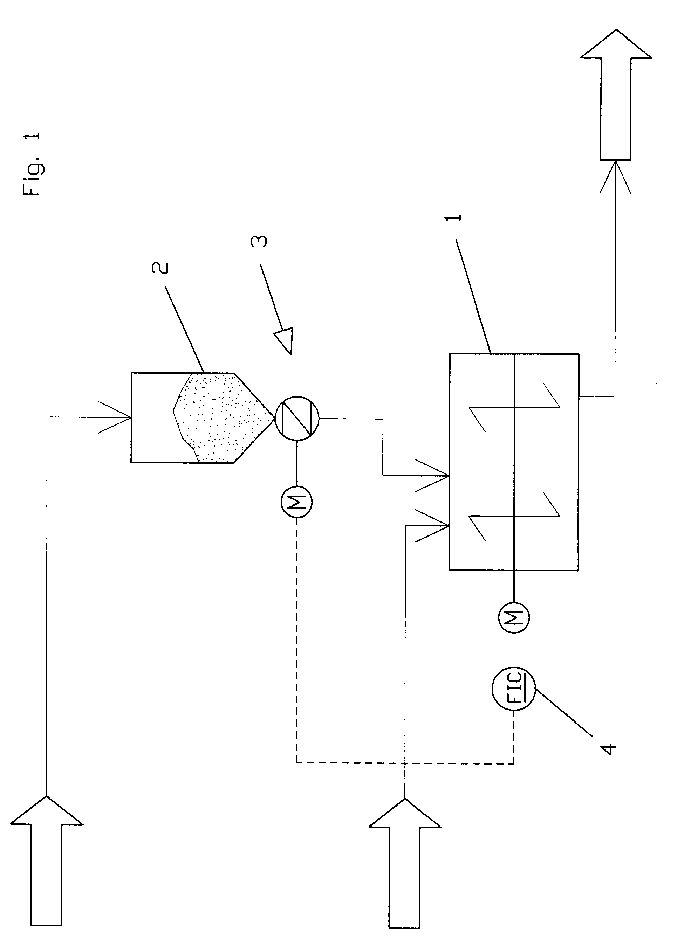

Wie Fig. 1 schematisch darstellt, wird der Gärrest bzw. die Gärsuspension aus einer nicht dargestellten Vergärungseinheit einer Mischeinrichtung 1 zugeführt. Die Konsistenz des Gärrestes kann je nach Ausgangsstoff dickflüssig bis stichfest sein, dieser kann etwa 5 bis 38 % Trockensubstanz enthalten. Dem Gärrest wird aus einem Vorratsbehälter 2 aluminosilikathaltiges Mineralmehl als Zuschlagstoff zugeführt, wobei die Zugabe über eine dem Vorratsbehälter 2 nachgeschaltete Dosiereinrichtung 3 gesteuert wird. Die Dosierung erfolgt in Abhängigkeit von der zuvor bestimmten Ammoniumkonzentration in dem vergorenen Material und in Abhängigkeit vom Massenstrom des der Mischeinrichtung 1 zugeführten Gärrests. Dieser Massenstrom wird über einen mit 4 bezeichneten Durchflußmesser mit Anzeige und Regelfunktion erfaßt und zur Steuerung der Dosiereinrichtung 3 verwendet. Das aus der Mischeinrichtung 1 ausgetragene Material kann als Bodenverbesserer oder Dünger verwandt werden. Es sei noch erwähnt, daß die Mischeinrichtung 1 sowohl kontinuierlich als auch diskontinuierlich betrieben werden kann.

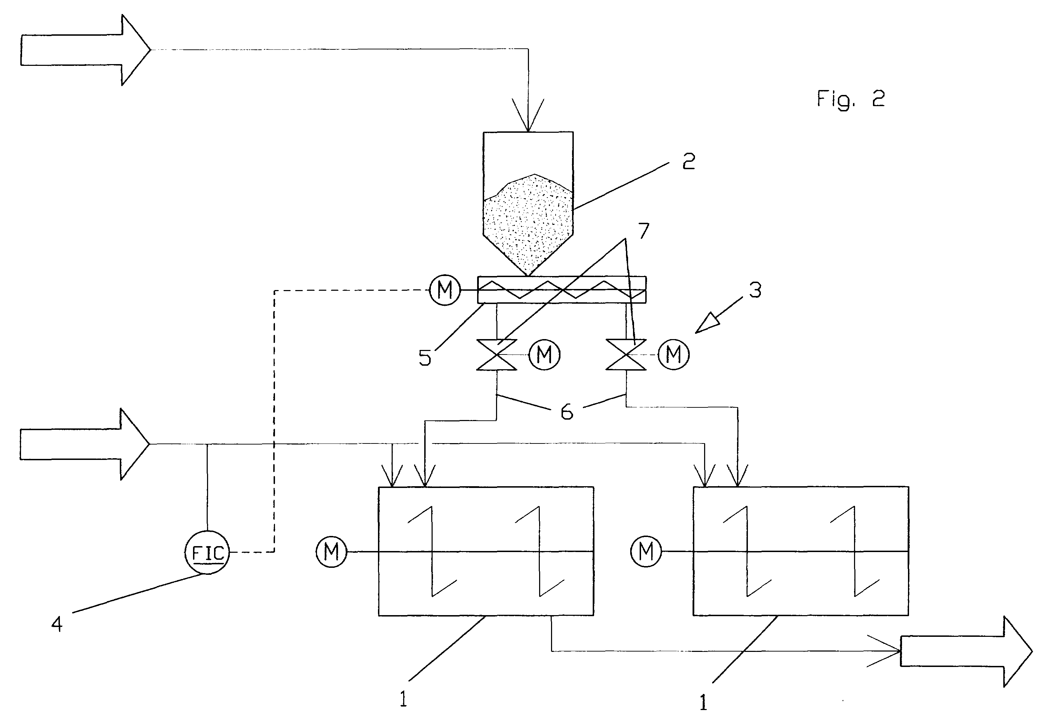

In Fig. 2 wird die Aufbereitung des Gärrests mit zwei Mischeinrichtungen 1 schematisch dargestellt. Hier sind gleiche Bezugszeichen für gleiche Funktionseinheiten verwendet. Der Gärrest wird entweder parallel oder nacheinander zwei Mischeinrichtungen 1 zugeführt, die ebenfalls sowohl kontinuierlich als auch diskontinuierlich betreibbar sind. Aus einem Vorratsbehälter 2 wird der Zuschlagsstoff ebenfalls über eine Dosiereinrichtung 3 auf die beiden Mischeinrichtungen 1 verteilt, und zwar über einen reversierbaren Schneckenförderer 5, der je nach eingestellter Förderrichtung entweder die eine oder die andere Mischeinrichtung 1 bedient. Die Zuführungen 6 zu den Mischeinrichtungen 1 sind wahlweise über Schieber 7 verschließbar. Mit 3 ist bei diesem Ausführungsbeispiel ein ebenfalls den Massenstrom erfassender Durchflußmesser mit Anzeige und Regelfunktion bezeichnet. Der von diesem erfaßte Massenstrom wird ebenfalls zur Steuerung der Dosiereinrichtung 3 verwendet.

### Bezugszeichenliste

- 1: Mischeinrichtung
- 2: Vorratsbehälter
- 3: Dosiereinrichtung
- 4: Durchflußmesser
- 5: Schneckenförderer
- 6: Zuführungen
- 7: Schieber

## Patentansprüche

1. Verfahren zur Aufbereitung von Gärresten aus Bioabfall-, Gülle- oder Klärschlammvergärungsanlagen, die als Bodenverbesserer oder Düngemittel Anwendung finden sollen, **dadurch gekennzeichnet,** daß den Gärresten, bevor diese der Atmosphäre ausgesetzt werden, Mittel zur Unterbindung der Ammoniakemission sowie zur Bindung des Ammoniaks in Form eines Alumosilikate enthaltenen festen Zuschlagsstoffs zugegeben werden, wobei eine Bindung der freien Ammoniumionen erfolgt.

2. Verfahren nach Anspruch 1, **dadurch gekennzeichnet,** daß als Zuschlagsstoff mineralische Substanz mit Feldspäten und/oder deren Verwitterungsprodukten gewählt wird.

3. Verfahren nach einem der Ansprüche 1 oder 2, **dadurch gekennzeichnet,** daß der Zuschlagstoff als Mineralmehl zugegeben wird.

4. Verfahren nach einem der Ansprüche 1 bis 3, **dadurch gekennzeichnet,** daß der Zuschlagsstoff den aus der Vergärungsanlage ausgetragenen Gärresten über wenigstens eine Dosier- und Mischeinrichtung zugesetzt wird.

5. Verfahren nach einem der Ansprüche 1 bis 4, **dadurch gekennzeichnet,** daß die Verweilzeit der Gärreste in einer Mischeinrichtung und die Menge des beigemengten Zuschlagsstoffs in Abhängigkeit von der Ammoniumkonzentration im Gärrest gewählt werden.
